# EUROPEAN PATENT SPECIFICATION

(11) **EP 0 639 254 B1**
(45) Date of publication and mention of the grant of the patent: **16.07.1997**
(21) Application number: 94905741.8
(22) Date of filing: 09.02.1994
(51) Int. Cl.: F22D 1/36, F01K 7/34

(54) **METHOD IN SMALL-POWER PLANT USE**
METHODE ANWENDBAR BEI KLEINEN KRAFTANLAGEN
METHODE APPLICABLE AUX PETITES CENTRALES THERMIQUES

(30) Priority: 19.02.1993 FI 930762
(43) Date of publication of application: 22.02.1995
(73) Proprietor: IMATRAN VOIMA OY, SF-01601 Vantaa (FI)
(72) Inventor: RAIKO, Markku, SF-02100 Espoo (FI)
(74) Representative: Pellmann, Hans-Bernd, Dipl.-Ing.
(86) International application number: FI9400052
(87) International publication number: WO9419645

(56) References cited:
- DE-A- 3 111 011
- GB-A- 841 040
- GB-A- 1 197 222

## Description

The invention concerns a method of operating a small-power plant.

A traditional steam power plant consists of a steam boiler and a steam turbine circuit. In optimization of a traditional steam power plant, the ultimate temperature of the flue gas and the temperature of the supply water passing into the boiler are considered as the criteria of dimensioning. In practice. first the temperature of the supply water of the steam turbine is optimized based on known criteria. in which, e.g., the values of fresh steam, the pressure in the condenser, and the number of pre-heating stages are taken into account. After this, the ultimate temperature of the flue gases of the boiler is optimized by dimensioning the flue-gas heat exchanger used for pre-heating of the combustion air so that the desired ultimate temperature of the flue gas is obtained. The flue-gas heat exchanger is a heat exchanger in which the material flow that is cooled is the flue gas and the material flow that is heated is the combustion air.

Attempts are made to construct the small power plants so that their wirings are simple. in order that their specific investment should not become excessively high. The most significant economies are obtained when the flue-gas heat exchanger of the boiler is omitted. The consequence is a change in the principles of optimization of the plant. In view of the efficiency of the plant, also then, the most important quantity to be optimized is the ultimate temperature of the flue gases of the boiler. Now. the temperature of the supply water cannot be chosen freely, but its value depends on the ultimate temperature of the flue gases. In practice, the temperature of the supply water is 105 °C ... 135 °C.

In this connection, a small power plant is understood as meaning either a condensing power plant that produces electricity or a heating power plant that produces both electricity and heat, being of an order of magnitude of 3...30 MWₑ. The main process in a small power plant consists of the whole constituted by the steam boiler and by the steam turbine. The steam boiler includes an economizer, a vaporizer, and superheaters. The steam turbine process comprises a steam turbine. a condenser or a district-heating heat exchanger, a supply-water tank, and a condensate pump and a supply-water pump.

The efficiency of a simple small power plant is rather low. The efficiency of the production of electricity in a condensing plant is about 32 %, and the construction ratio of a district-heating power plant is about 31 %.

A steam heat exchanger is used commonly for the purpose of protecting the flue-gas heat exchanger so as to raise the ultimate temperature of the boiler in starting situations and possibly when fuels of high sulphur contents are burned. In such a case, the object is to prevent temperatures lower than the water or acid dew point in the flue-gas heat exchanger, which temperatures would again result in corrosion and contamination of the heat faces in the heat exchanger. In this case, unnecessary use of a steam heat exchanger results in an increased ultimate temperature of the flue gases, and thereby it has a deteriorating effect on the efficiency of the boiler. In the prior-art steam boilers that have no flue-gas heat exchanger, a steam heat exchanger has not been used either.

It is also known in prior art to replace a flue-gas heat exchanger by a heat-exchanger system in which the supply water is used as the medium (Patents DE 3 111 011 A1 and DE 2 243 380). In such a case, the object is to obtain improved adjustability or a less expensive heat face. The thermodynamic advantage is related to the improved adjustability in different operating conditions.

Also, in prior art, energy-economic use of a steam heat exchanger is known for pre-heating of the combustion air in peat and lignite power plants when the cooling of the flue gases takes place partly in a flue-gas heat exchanger and partly in a fuel dryer that makes use of the heat of the flue gases (FI Patent No. 77.512). In such a case, pre-heating of the combustion air by means of a steam heat-exchanger from time to time is advisable, because the capacity transferred from the flue gases to the combustion air varies depending on the moisture content in the flue. The basis of dimensioning of the flue-gas heat exchanger is invariable to moisture content in the fuel. Momentary deviations from this dimensioning moisture justify the possibility of using the steam heat exchanger.

It is an object of the present invention to provide a method of operating a small power plant wherein the consumption of fuel is reduced and the efficiency is enhanced.

According to the present invention, the above objects are achieved by a method of operating a small power plant, the order of magnitude of said small power plant being in the range of 3 ... 30 MWₑ and said small power plant comprising a furnace and a steam turbine fitted to drive an electric generator for producing electricity, and in which the water of the steam turbine circuit is circulated from the steam turbine into an economizer placed in a boiler, from the economizer to a vaporizer and further from the vaporizer to a superheater, which are placed in connection with the boiler structure, and the superheated steam is transferred from the superheater to the steam turbine to rotate the electric generator, wherein
- the flue gases are removed out of connection with the boiler structure so that the last heat exchange surface at which the flue gases deliver heat is the economizer placed in the boiler structure,
- the flue gases are removed from the boiler at a temperature of 95°C ... 150°C,
- and the combustion air is introduced into the furnace in preheated form whereby for the pre-heating of the combustion air exclusively the condensing heat of bled steam or back-pressure steam of the turbine or supply water that has been heated by said steams is used, the combustion air being introduced into the furnace at a temperature of 80°C ... 120°C.

The invention described in the present application is based on the observation that, for reasons of energy economy, it is advisable to heat the combustion air that is passed into the boiler of a small power plant by means of the heat obtained from the steam-turbine circuit. The pre-heating is carried out by means of air pre-heaters that make use of the condensing heat of bled steam or back-pressure steam in one or several stages in a way similar to the supply water passed into the boiler. The temperature of the combustion air is a freely optimizable quantity when the flue gases of the boiler are cooled by means of a water-steam circuit.

The use of an air pre-heater lowers the fuel consumption in the plant by an amount equal to the pre-heating capacity. The steam condensing heat that is used for the pre-heating is of almost no value in view of production of electricity if back-pressure steam or bled steam is used for the heating. On the contrary, the capacity used for pre-heating reduces the district-heating capacity. In plants that produce district heating, the lowering of the district-heating capacity is of the same order as the lowering of the fuel capacity. As a result, the power ratio of electricity and district heating, i.e. the construction ratio, becomes higher and provides an advantage for the concept in comparison with a conventional concept.

For pre-heating, it is possible to use both bled steam or back-pressure steam and warm supply water, in which case the heating of the combustion air takes place indirectly. In both cases, for pre-heating of the air. the condensing heat of the steam obtained from the steam turbine is used.

The invention improves the efficiency of a condensing plant by about 1 percentage unit. The construction ratio of a heating power plant is improved by 1.7 percentage unit.

A steam heat exchanger is quite advantageous as an investment. The wiring system in accordance with the invention has a multiple value, compared with its investment cost, depending on the particular power-plant project.

The method in accordance with the invention is mainly characterized in that, in the method,
- the flue gases are removed out of connection with the boiler structure so that the last heat face at which the flue gases deliver heat is the economizer placed in the boiler structure,
- and that the flue gases are removed from the boiler at a temperature of 95 °C... 150 °C,
- and that, in the method, the combustion air is introduced into the furnace as pre-heated while for the pre-heating of the combustion air using exclusively the condensing heat of the bled steam or back-pressure steam of the turbine or supply water that has been heated by said steams, the combustion air being introduced into the furnace at a temperature of 80 °C ... 120 °C, in which case, along with the pre-heating of the combustion air, the consumption of fuel in the plant is reduced by an amount equal to the pre-heating capacity.

In the following, the invention will be described with reference to some preferred embodiments of the invention illustrated in the accompanying drawings, the invention being, however, not supposed to be confined to said embodiments alone.

Figure 1 is a partly schematic illustration of a small power plant in accordance with the invention.

Figure 2 illustrates the method of the invention as a process diagram.

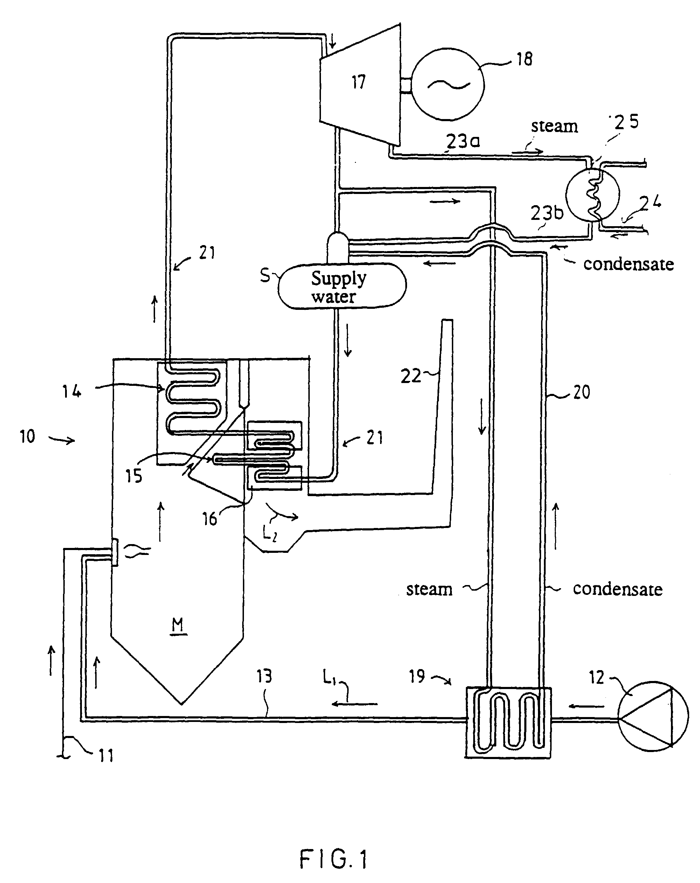

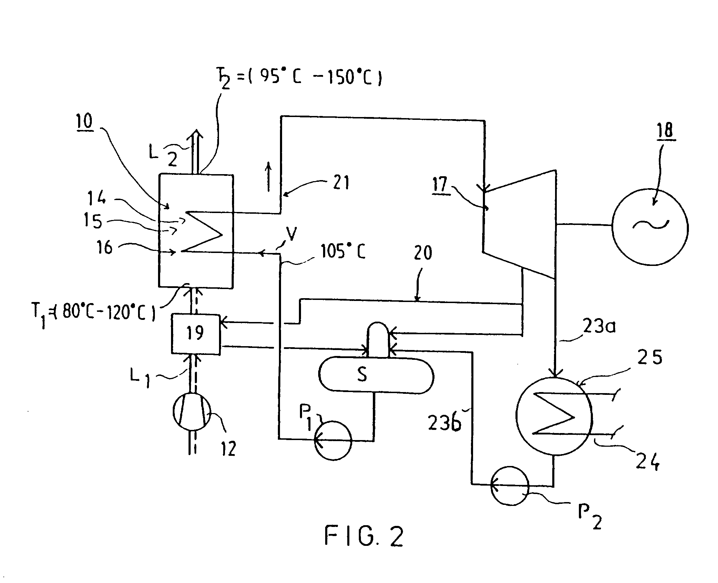

Fig. 1 illustrates the boiler construction of a small power plant in accordance with the invention. The small power plant is of an order of magnitude of 3...30 MWₑ. The rest of the structure related to the small power plant is illustrated in the process diagram in Fig. 2. The fuel, such as peat, and possible carrier air are passed along the duct 11 into the boiler 10. By means of the blower 12, the combustion air is passed along the duct 13 into the boiler 10 into its furnace M. The boiler construction comprises a superheater 14, a vaporizer 15 and an economizer 16. The vaporizer consists typically of the walls of the furnace. Through the economizer 16, the circulation water of the steam side is made to flow into the vaporizer 15 and the superheater 14 and further to the steam turbine 17, which rotates the electric generator 18 that produces electricity. In the solution in accordance with the invention as shown in Fig. 1, the combustion air is heated by means of the condensing heat of the steam obtained from the steam turbine 17 so that bled steam or back-pressure steam or supply water that has been heated by means of these steams is used for the heating, in which case the heating of the combustion air takes place indirectly. The thermal energy is transferred to the combustion air in a heat exchanger 19 through which the combustion air and the steam of the steam-supply circuit 20 are circulated.

The steam is condensed in the heat exchanger 19, and the condensate is passed into the supply water tank S. Thus, in the solution in accordance with the invention, the air is pre-heated by means of the heat obtained from the steam-turbine circuit 20. The temperature T₁ of the combustion air L₁ is a freely optimizable quantity when the flue gases of the boiler are cooled by means of the water-steam circuit 21. The circuit 21 preferably comprises a pump P₁ (in Fig. 2). The optimal range for T₁ is 80 °C ... 120 °C. The economizer 16 of the boiler 10 is the last heat face at which the flue gases L₂ deliver heat, while flowing after that into the chimney 22 and out. The temperature range of the flue gas L₂ flowing out from the boiler 10 is T₂ = 95 °C ... 150 °C.

In the figure, the district-heating circuit or the cooling circuit is denoted with the reference numeral 23.24. The bled steam of the steam turbine is passed along the duct 23a into the heat exchanger 25, where the condensed steam delivers its condensing heat to the district-heating water that circulates in the circuit 24. The condensate water is passed from the heat exchanger 25 along the duct 23b into the supply water tank. The condensate duct 23b may include a pump P₂ (in Fig. 2).

Along with the pre-heating of the air, the fuel consumption of the plant is lowered by an amount equal to the pre-heating capacity. The pre-heating capacity lowers the district-heating capacity. In plants that produce district heating, the lowering of the district-heating capacity is of the same order of magnitude as the lowering of the fuel capacity. As a consequence, the power ratio of electricity and district heating, i.e. the so-called construction ratio, is increased and provides an advantage for the concept in comparison with a conventional operation of a small power plant. For the pre-heating, it is possible to use both bled steam or back-pressure steam or warm supply water. However, it is a feature common of all of the arrangements mentioned above that, for the pre-heating of the combustion air, condensing heat of the steam obtained from the steam turbine is used.

Fig. 2 shows a process diagram of the method in accordance with the invention. The supply water V that is passed into the boiler 10 is circulated through the boiler 10, in which it is vaporized and transferred to the steam turbine 17. The flue gases L₂ are removed from the boiler, while the flue-gas duct does not include a flue-gas heat exchanger. It is an essential feature of the method that the last heat exchange surface 16 that is passed by the flue gases before the chimney is placed in the boiler structure 10. The blower air L₁, whose temperature is about 30 °C, is heated by means of the condensing heat of the steam in the steam heat exchanger 19 to about 100 °C. Thus, the blower air L₁ is passed through the steam heat exchanger 19 as pre-heated into the boiler 10. The temperature range to which the combustion air is heated is T₁ = 80 °C ... 120 °C.

## Claims

1. Method of operating a small power plant, the order of magnitude of said small power plant being in the range of 3 ... 30 MWₑ and said small power plant comprising a furnace (M) and a steam turbine (17) fitted to drive an electric generator (18) for producing electricity, and in which the water of the steam turbine circuit is circulated from the steam turbine (17) into an economizer (16) placed in a boiler (10), from the economizer (16) to a vaporizer (15) and further from the vaporizer (15) to a superheater (14), which are placed in connection with the boiler structure, and the superheated steam is transferred from the superheater (14) to the steam turbine (17) to rotate the electric generator (18),
**characterized in that**
- the flue gases (L₂) are removed out of connection with the boiler structure so that the last heat exchange surface at which the flue gases deliver heat is the economizer (16) placed in the boiler structure,
- and that the flue gases are removed from the boiler at a temperature of 95°C ... 150°C,
- and that the combustion air is introduced into the furnace (M) in preheated form whereby for the pre-heating of the combustion air exclusively the condensing heat of bled steam or back-pressure steam of the turbine or supply water that has been heated by said steams is used; the combustion air being introduced into the furnace (M) at a temperature of 80°C ... 120°C.

## Patentansprüche

1. Verfahren zum Betrieb einer kleinen Kraftanlage, wobei die Größenordnung der kleinen Kraftanlage in dem Bereich von 3 bis 30 MWₑ liegt und die kleine Kraftanlage einen Brennofen (M) und eine Dampfturbine (17) hat, die geeignet ist, einen elektrischen Generator (18) zum Erzeugen von elektrischer Energie anzutreiben, und in der das Wasser des Dampfturbinenkreislaufes von der Dampfturbine (17) in einen in einem Kessel (10) angeordneten Vorwärmer (16), von dem Vorwärmer (16) zu einem Verdampfer (15) und weiter von dem Verdampfer (15) zu einem Überhitzer (14) zirkuliert wird, die in Verbindung mit der Kesselstruktur angeordnet sind, wobei der überhitzte Dampf von dem Überhitzer (14) zu der Dampfturbine (17) transferiert wird, um den elektrischen Generator (18) zu drehen,
**dadurch gekennzeichnet, daß**
- die Abzugsgase (L2) derart außer Verbindung mit der Kesselstruktur gebracht werden, daß die letzte Wärmeaustauschoberfläche, an der die Abzugsgase Wärme abliefern, der in der Kesselstruktur angeordnete Vorwärmer (16) ist,
- und daß die Abzugsgase mit einer Temperatur von 95°C bis 150°C von dem Kessel abgezogen werden,
- und daß die Verbrennungsluft in vorgewärmter Form in den Brennofen (M) eingeführt wird, wobei für das Vorwärmen der Verbrennungsluft ausschließlich die Kondensationswärme von Abzapfdampf oder Gegendruckdampf der Turbine oder mittels dieser Dämpfe erwärmtes Einspeisewasser verwendet wird, wobei die Verbrennungsluft mit einer Temperatur von 80°C bis 120°C in den Brennofen (M) eingeführt wird.

## Revendications

1. Procédé pour le fonctionnement d'une petite centrale thermique, l'ordre de grandeur de cette petite centrale thermique se situant dans la plage de 3 ... 30 MWₑ et cette petite centrale thermique comprenant un four (M) et une turbine à vapeur (17) apte à entraîner un générateur électrique (18) pour produire de l'électricité, et procédé dans lequel l'eau du circuit de la turbine à vapeur est mise en circulation depuis la turbine à vapeur (17) jusque dans un économiseur (16) placé dans une chaudière (10), depuis l'économiseur (16) jusqu'à un évaporateur (15) et ensuite depuis l'évaporateur (15) jusqu'à un surchauffeur (14), qui sont disposés en liaison avec la structure de chaudière, et la vapeur surchauffée est transférée depuis le surchauffeur (14) jusqu'à la turbine à vapeur (17) pour faire tourner le générateur électrique (18),
**caractérisé en ce que**
- les gaz de fumée (L₂) sont déconnectés de la structure de chaudière de sorte que la dernière surface d'échange thermique sur laquelle les gaz de fumée fournissent de la chaleur est l'économiseur (16) placé dans la structure de chaudière,
- et en ce que les gaz de fumée sont évacués de la chaudière à une température de 95°C ... 150°C,
- et en ce que l'air de combustion est introduit dans le four (M) sous la forme préchauffée de sorte que pour le préchauffage de l'air de combustion, on utilise exclusivement la chaleur de condensation de la vapeur purgée ou de la vapeur en contre-pression de la turbine ou de l'eau d'alimentation qui a été chauffée par ces vapeurs ; l'air de combustion étant introduit dans le four (M) à une température de 80°C ... 120°C.
